# EUROPEAN PATENT APPLICATION

(11) **EP 4 571 491 A1**
(43) Date of publication of application: **18.06.2025**
(21) Application number: 23216029.1
(22) Date of filing: 12.12.2023
(51) Int. Cl.: G06F 8/20, G06F 8/34, G06F 8/38, G06F 8/60, G06F 9/445, G06F 9/451

(54) **SYSTEM AND METHOD FOR DEVELOPING AN IMMERSIVE EXPERIENCE, SERVICE MESH AND COMPUTER PROGRAM PRODUCT**

(71) Applicant: Deutsche Telekom AG, 53113 Bonn (DE)
(72) Inventor: FREI, Patrick, 80333 München (DE); CID CASTRO, Wenceslao, 64342 Seeheim-Jugenheim (DE); ARUNOV, Elmar, 10587 Berlin (DE)
(74) Representative: RDL Patentanwälte PartG mbB

(57) **Abstract**

A system for developping a three-dimensional real-time, 3DRT, application, the system comprising a hybrid multicloud infrastructure providing a backend of a distributed development platform, the backend comprising a plurality of different services for realizing a development project for developing a 3DRT application, and a terminal device providing a frontend of the distributed development platform, the frontend comprising a graphical user interface, GUI; a method for developing a 3DRT application, a use of a service mesh and a computer program product.

## Description

The invention relates to a system for developing a three-dimensional real-time, 3DRT, application, the system comprising a hybrid multi-cloud infrastructure providing a backend of a distributed development platform, the backend comprising a plurality of different services for realizing a development project for developing a 3RDT application, and a terminal device providing a frontend of the distributed development platform, the frontend comprising a user interface. The invention further relates to a method for developing a 3DRT application, a use of a service mesh and a computer program product.

Three-dimensional real-time, 3DRT applications are distributed applications providing a consumer with an immersive experience and, hence, are also referred to as immersive experiences for short. A backend of a 3DRT application is usually provided by a cloud and accessed by a frontend of the 3DRT application provided by an extended reality, XR, device. The XR device comprises a virtual reality, VR, device, an augmented reality, AR, device, a mixed reality device, and combinations of these devices.

Nowadays, a demand for advanced 3DRT applications is steadily growing. A 3DRT application generally uses a complex infrastructure providing a high computational power and, at the same time, is required to provide a high degree of scalability.

Developing a 3DRT application currently is, however, inefficient, i.e., specific, tedious, erroneous and, hence, expensive. Herein, the development of the 3DRT application shall be broadly understood as an end-to-end, E2E, process covering a complete lifetime of a 3DRT application and having a plurality of stages covering everything between initializing a development project for the 3DRT application to be developed and billing consumers of the immersive experience provided by the developed 3DRT application.

It is, therefore, an object of the invention to provide a system for developing a 3DRT application which completely covers and facilitates the development process, equally supports very different 3DRT applications and allows 3DRT applications for being economically developed. Further objects of the invention are to suggest a method for developing a 3DRT application and a use of a service mesh and to provide a computer program product.

A first aspect of the invention is a system for developing a three-dimensional real-time, 3DRT, application, the system comprising a hybrid multi-cloud infrastructure providing a backend of a distributed development platform, the backend comprising a plurality of different services for realizing a development project for developing a 3DRT application, and a terminal device providing a frontend of the distributed development platform, the frontend comprising a user interface. The hybrid multi-cloud infrastructure comprises a plurality of clouds. The plurality of clouds may comprise both a plurality of clouds provided by different providers and a plurality of clouds provided by a single provider. As each cloud of the hybrid multi-cloud infrastructure comprises a plurality of hardware components, the hybrid multi-cloud infrastructure as a whole comprises an even larger plurality of hardware components, i.e., technical components. Insofar, the hybrid multi-cloud infrastructure essentially is a distributed hardware infrastructure.

In contrast, the distributed development platform is a distributed application having a frontend and a backend and comprises a plurality of software components. Insofar, the distributed development platform essentially is a distributed software infrastructure.

The terminal device may comprise a desktop computer, a notebook, a tablet, a smartphone and the like and is configured for executing the frontend, i.e., providing the user interface. For instance, the terminal device is configured for displaying a graphical user interface, GUI, as the user interface and receiving commands of a developer manually operating the terminal device. The GUI favorably comprises a wizard, i.e., a digital assistant, supporting the developer in working on the development project. Of course, the frontend may additionally or alternatively provide a command line interface, CLI, as the user interface, the CLI allowing the frontend to be automatically operated by, e.g., scripts. Further, the frontend may additionally or alternatively comprise a representational state transfer, REST, application programming interface, API, as the user interface, the REST API allowing the frontend to be automatically operated by any REST capable software tool.

The development project is adapted to completely developing the 3DRT application, i.e., covers every requirement to be met in developing the 3DRT application. The development project is, on the other hand, generic regarding the 3DRT application to be developed. In other words, the development project does not favor a special kind of 3DRT applications, e.g., gaming applications, but rather supports a broad range of very different 3DRT applications, e.g., industrial applications. Realizing the development project means completing the development project end-to-end, E2E.

According to the invention, the different services are communicatively linked by a service mesh of the backend. The service mesh is a software layer allowing the different services of the backend to interact and to cooperate. The service mesh is the integrative component, i.e., an overlay structure of the backend allowing the developer for easily developing a 3DRT application. The service mesh may comprise a global control object and a plurality of remote control objects connected to the global control object.

The backend may define a plurality of planes, each plane comprising one cluster or more than one cluster, each cluster comprising one service or more than one service, each service being communicatively connected to the service mesh. The planes and the clusters allow for a functional grouping of the different services. The function grouping improves a usability of the development platform. A respective remote control object of the service mesh is preferably assigned and connected to each cluster.

The backend preferably defines a first plane comprising a project cluster and/or a second plane comprising a plurality of runtime clusters and/or a third plane comprising a plurality of extended reality, XR, devices configured for accessing a running 3DRT application. The listed planes correspond to different stages of a development process which are described below. The first plane may be considered a provisioning/control plane. The second plane may be considered a services plane, wherein services here address services to be consumed by a consumer. The third plane may be considered a client plane comprising devices used by a consumer when consuming 3DRT applications, i.e., immersive experiences.

The project cluster may comprise a developer authentication service, a project configuration service, a cost estimation service, a client app customization service, a project generation service, a notification service, a checking availability service and/or a project control service. The cost estimation service allows the developer for economically evaluating the development project and, hence adapting the development project to economic requirements. The checking availability service supports the developer in selecting only available services to be involved by the 3DRT application to be developed. The client app customization service supports the developer in defining and preparing the prerequisite software for the devices used to consume the developed immersive experience. The project generation service supports the developer in deploying the 3DRT application of the development project, i.e., transferring the 3DRT application to the second plane. The project control service supports the developer in starting or stopping the deployed 3DRT application, removing the 3DRT application from the second plane, statistically evaluating the deployed 3DRT application and billing the consumers using the deployed 3DRT application.

The plurality of runtime clusters may comprise a common services cluster, the common services cluster comprising a deployment service, a consumer authorization service, a UI theming service, an XR session orchestration service, an XR metrics service, a network conditions SIM service and/or a billing service. The plurality of runtime clusters may additionally or alternatively comprise an Omniverse, OVX, cluster, the OVX cluster comprising an Omniverse application, a plurality of OVX micro services, an Omniverse nucleus server and/or Omniverse 3DRT applications, and/or a game engine cluster, the game engine cluster comprising a plurality of game engine services. The plurality of runtime clusters may additionally or alternatively comprise an artificial intelligence, Al, cluster, the AI cluster comprising an NVIDIA avatar cloud engine and a plurality of AI services. The container registry is configured for registering each component of the developed 3DRT application. The OVX services support controlling digital twins running within Omniverse, a 3DRT engine provided by NVIDIA. The AI services support usage of artificial neural networks. The game engine services support online gaming. The services of the common services cluster provide administrative services supporting the developed 3DRT application during runtime.

The backend may further comprise a container registry and a mass storage configured for storing resources of the development project, e.g., a program code of the development project, data concerning infrastructure as a service, laaS, and data concerning configuration as a service, CaaS, and common resources, e.g., software development kits, SDK, or GitHub actions controlling versions of the program code. The backend may further comprise an application programming interface, API, gateway configured for connecting the frontend of the development platform to the first plane defined by the backend, a 3DRT gateway configured for connecting the frontend of the 3DRT application to the second plane defined by the backend, an integration gateway and a high speed dynamic resource management system.

A second aspect of the invention is a method for developing a 3DRT application, wherein a frontend of a distributed development platform accesses a backend of the distributed development platform, the frontend being provided by a terminal device and the backend being provided by a hybrid multi-cloud structure and comprising a plurality of different services for realizing a development project for developing a 3DRT application. The method is carried out by a frontend and a backend of a distributed development platform in order to develop a 3DRT application. The frontend is usually operated by a developer. Alternatively, the frontend may be operated by a script by means of a CLI of the frontend or by a REST capable software tool via a REST API of the frontend. Realizing the development project means completing the development project end-to-end, E2E.

According to the invention, the different services are communicatively linked by a service mesh of the backend. The service mesh is a software layer allowing the different services of the backend to communicate with each other. The service mesh is the prerequisite of the method allowing the developer for easily developing a 3DRT application.

The method preferably comprises a plurality of subsequent stages, the plurality of stages comprising a setup stage, a configuration stage following the setup stage, a deployment stage following the configuration stage, a consumption stage following the deployment stage and a validation stage following the consumption stage. The stages form an ordered sequence which is passed through by the developer sequentially when developing the 3DRT application.

A first plane defined by the backend may support the setup stage, the configuration stage, the deployment stage and the validation stage. A second plane defined by the backend may support the deployment stage and the consumption stage. A third plane defined by the backend may support the consumption stage and the validation stage. In other words, the developer changes back and forth between the defined planes when passing through the stages of the development process.

In a preferred embodiment, a sequence of the deployment stage, the consumption stage and the validation stage is iteratively repeated for further developing the 3DRT application. The sequence defines an optimization loop allowing for successively improving the immersive experience.

The setup stage may comprise authenticating a developer and creating a development project for developing the 3DRT application. Only authenticated developers are allowed to access the distributed development system. The setup stage initializes the development project.

The configuration stage may comprise setting properties of the development project, selecting common services of the development project, examining costs of the development project, saving the development project and downloading resources of the development project. During the configuration stage the developer determines static characteristics of the development project.

The deployment stage may comprise deploying the development project, customizing a client app of the development project, enrolling/inviting consumers of the development project and running the 3DRT application of the development project. The deployment stage prepares the consumption stage. The developed 3DRT application may be already and earliest deployed as a minimum viable product, MVP.

The consumption stage may comprise running the customized client app, logging into the running 3DRT application and consuming an immersive experience provided by the running 3DRT application. The consumption stage allows consumers to consume the developed immersive experience. The developed 3DRT application undergoes a public practical test.

The validation stage comprises stopping the running 3DRT application, reviewing billing information of the stopped 3DRT application and receiving an analytics report of the stopped 3DRT application. In other words, the validation stage evaluates the current level of the development project, i.e., the success of the development project currently achieved.

A third aspect of the invention is a use of a service mesh. The service mesh is a software layer allowing services of an application to communicate.

According to the invention, the service mesh is used for implementing a backend of a distributed development platform of a system for developing a 3DRT application. The service mesh integrates services of a first plane and a second plane defined by the backend. The resulting backend completely covers and facilitates developing 3DRT applications, equally supports very different 3DRT applications and allows 3DRT applications for being economically developed.

A fourth aspect of the invention is a computer program product, comprising a digital storage medium storing a program code. The digital storage medium may comprise a hard disk, a digital versatile disk (DVD), a Universal Serial Bus (USB) stick, a random access memory (RAM) and the like and be provided locally or in a cloud connected to the internet, i.e. an internet cloud. The program code may be executed immediately from the storage medium or after an installation.

According to the invention, the program code causes a hybrid multi-cloud infrastructure to participate in a method according to the invention as a backend of a distributed development platform of a system for developing a 3DRT application when being executed by processors of the hybrid multi-cloud infrastructure. The program code of the computer program product enables the hybrid multi-cloud infrastructure for providing a backend of a development platform of a system according to the invention for developing a 3DRT application.

An essential advantage of the inventive system is that the complete development process of a 3DRT application is facilitated, very different 3DRT applications are equally supported and 3DRT applications are allowed for being economically developed, i.e., straight forward and in a short time.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.
- Fig. 1: schematically shows a component diagram of a system according to the invention for developing a 3DRT application;
- Fig. 2: schematically shows a flow diagram of a method according to the invention for developing a 3DRT application.

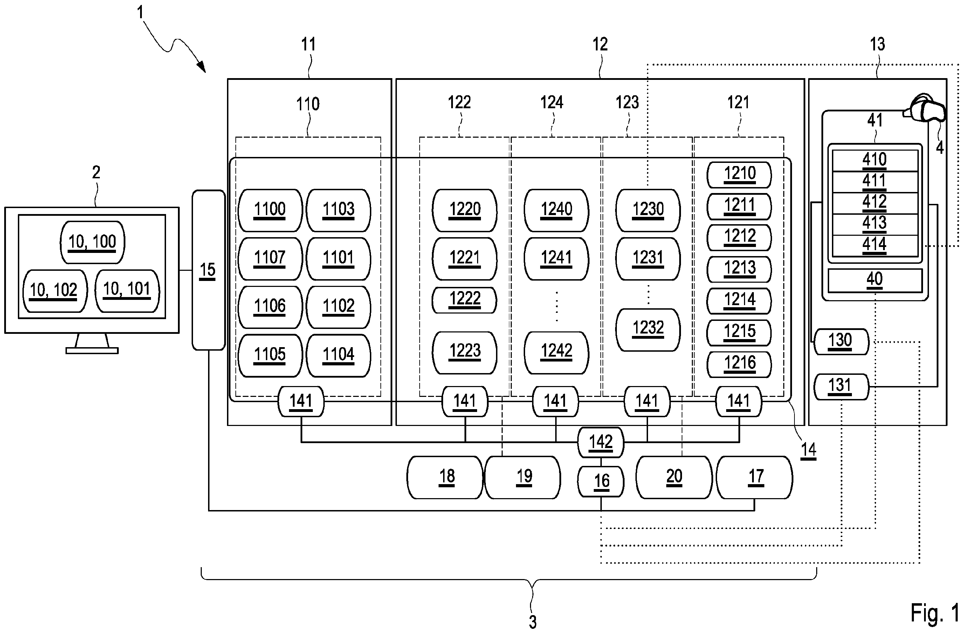

Fig. 1 schematically shows a component diagram of a system according to the invention for developing a 3DRT application, an immersive experience for short. The system for developing a three-dimensional real-time, 3DRT, application comprises a hybrid multi-cloud infrastructure 3. The hybrid multi-cloud infrastructure 3 provides a backend 1 of a distributed development platform.

The backend 1 may be implemented by means of a computer program product. The computer program product comprises a digital storage medium storing a program code. The program code causes the hybrid multi-cloud infrastructure to participate in a method according to an embodiment of the invention as the backend of the distributed development platform of the system when being executed by processors of the hybrid multi-cloud infrastructure.

The backend 1 comprises a plurality of different services for realizing a development project for developing a 3DRT application. The different services are communicatively linked by a service mesh 14 of the system. The service mesh 14 is used, according to the invention, for implementing the backend 1 of the distributed development platform of the system for developing a 3DRT application. The service mesh 14 is exemplarily provided by a kubernetes instance. The kubernetes instance comprises a plurality of remote control objects 141, each remote control object 141 being assigned to a runtime cluster 110, 121, 122, 123, 124, respectively, and further comprises a single global control object 142 communicatively connected to each remote control object 141.

Preferably, the backend 1 defines a plurality of planes 11, 12, 13, each plane 11, 12, 13 comprising one cluster or more than one clusters, each cluster comprising one service or more than one service, each service being communicatively connected to the service mesh 14.

The backend 1 may particularly define a first plane 11 comprising a project cluster 110. The first plane 11 particularly provides a plurality of 3DRT engine pipelines, e.g. a Unity pipeline, an Unreal pipeline and/or an Omniverse pipeline. The project cluster 110 may comprise a developer authentication service 1100, a project configuration service 1101, a cost estimation service 1102, a client app customization service 1103, a project generation service 1104, a checking availability service 1106, and/or a project control service 1107.

The backend 1 may particularly define a second plane 12 comprising a plurality of runtime clusters 121, 122, 123, 124. The plurality of runtime clusters 121, 122, 123, 124 may comprise a common services cluster 121, an Omniverse, OVX, cluster 122, a game engine cluster 123 and an artificial intelligence, AI cluster 124.

The common services cluster 121 may comprise a deployment service 1210, a consumer authorization service 1211, a UI theming service 1212, an XR session orchestration service 1213, an XR metrics service 1214, a network conditions SIM service 1215 and/or a billing service 1216.

The OVX cluster 122 may comprise an Omniverse application 1220, Omniverse micro services 1221, an Omniverse Nucleus Server 1222 and/or Omniverse 3DRT applications 1223. The game engine cluster 123 may comprise a plurality of game engine services 1230, 1231, 1232. The Al cluster 124 may comprise an NVIDIA avatar cloud engine 1240 and a plurality of AI services 1241, 1242.

The backend 1 may particularly define a third plane 13 comprising a plurality of extended reality, XR, devices 4 for accessing a running 3DRT application. The XR device 4 may be configured, for instance, as glasses, a notebook, a smartphone, a tablet, a desktop computer and the like. Each XR device may comprise a device runtime engine 40 and an 3DRT application frontend 41. The 3DRT application frontend may comprise an authentication software development kit, SDK, 410, a theming SDK 411, a synchronization SDK 412, a network metrics SDK 413 and a cloudXR client SDK 414.

The third plane 13 may further comprise a mobile device management, MDM, 130 and a content delivery network, CDN, 131.

The backend 1 may additionally comprise an application programming interface, API, gateway 15, the API gateway 15 being configured for connecting the frontend 10 to the first plane 11 defined by the backend 1, and a 3DRT gateway 16. the 3DRT gateway 16 being configured for connecting the 3DRT application frontend 41 to the second plane 12 defined by the backend 1.

An integration gateway 17, a container registry 18, a mass storage 19 and a high speed dynamic resource management system 20 may also form part of the backend 1.

The system further comprises a terminal device 2. The terminal device 2 provides a frontend 10 of the distributed development platform. The frontend 10 comprises a user interface. The user interface may comprise a graphical user interface, GUI, 100, a command line interface, CLI, 101 and/or a representational state transfer, REST, application programming interface, API, 102.

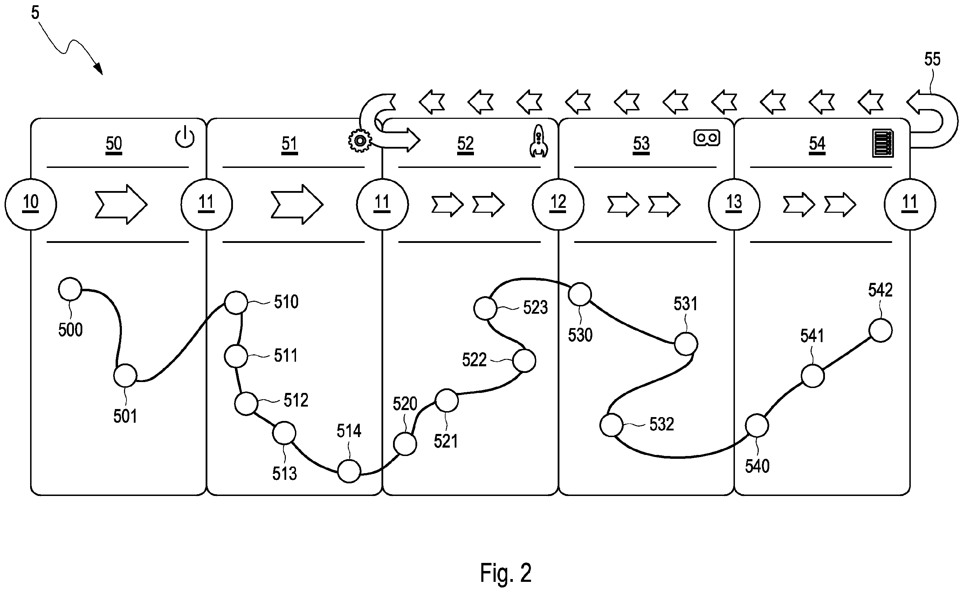

Fig. 2 schematically shows a flow diagram of a method 5 according to the invention for developing a 3DRT application. The method 5 comprises the following steps.

The frontend 10 of the distributed development platform accesses the backend 1 of the distributed development platform. The frontend 10 is provided by a terminal device 2. The backend 1 is provided by a hybrid multi-cloud structure 3 and comprises a plurality of different services for realizing a development project for developing a 3RDT application, the different services being communicatively linked by a service mesh 14 of the backend 1.

The method 5 preferably comprises a plurality of subsequent stages 50, 51, 52, 53, 54. The plurality of stages 50, 51, 52, 53, 54 may comprise a setup stage 50, a configuration stage 51 following the setup stage 50, a deployment stage 52 following the configuration stage 51, a consumption stage 53 following the deployment stage 52 and a validation stage 54 following the consumption stage 53.

The setup stage 50 comprises authenticating 500 a developer and creating 501 the development project for developing the 3DRT application. The configuration stage 51 comprises setting 510 properties of the development project, selecting 511 common services of the development project, examining 512 costs of the development project, saving 513 the development project and downloading 514 resources of the development project.

The deployment stage 52 comprises deploying 520 the development project, customizing 521 a client app of the development project, enrolling/inviting 522 consumers of the development project and running 523 the 3DRT application of the development project.

The consumption stage 53 comprises running 530 the customized client app, logging 531 into the running 3DRT application and consuming 532 an immersive experience provided by the running 3DRT application.

The validation stage 54 comprises stopping 540 the running 3DRT application, reviewing 541 billing information of the stopped 3DRT application and receiving 542 an analytics report of the stopped 3DRT application.

The first plane 11 defined by the backend 1 supports the setup stage 50, the configuration stage 51, the deployment stage 52 and the validation stage 54. The second plane 12 defined by the backend 1 supports the deployment stage 52 and the consumption stage 53. The third plane 13 defined by the backend 1 supports the consumption stage 53 and the validation stage 54.

A sequence of the deployment stage 52, the consumption stage 53 and the validation stage 54 may be iteratively repeated for further developing the 3DRT application of the development project, thus forming an optimization loop of the development project.

### Reference Numerals

- 1: backend of the development platform
- 10: frontend of the development platform
- 100: graphical user interface, GUI
- 101: command line interface, CLI
- 102: representational state transfer, REST, Application Programming Interface, API
- 11: first plane
- 110: project setup cluster
- 1100: developer authenticating service
- 1101: project configuration service
- 1102: cost estimation service
- 1103: client app customization service
- 1104: project generation service
- 1105: notification service
- 1106: checking availability service
- 1107: project control service
- 12: second plane
- 121: common services cluster
- 1210: deployment service
- 1211: consumer authorization service
- 1212: UI theming service
- 1213: XR session orchestration service
- 1214: XR metrics service
- 1215: network conditions SIM service
- 1216: billing service
- 122: Omniverse cluster
- 1220: Omniverse application
- 1221: Omniverse Micro services
- 1222: Omniverse Nucleus Server
- 1223: Omniverse 3DRT application
- 123: game engine cluster
- 1230: game engine 3DRT application
- 1231: game engine 3DRT application
- 1232: game engine 3DRT application
- 124: artificial intelligence, Al, cluster
- 1240: NVIDIA avatar cloud engine
- 1241: generative AI service
- 1242: generative AI service
- 13: third plane
- 130: mobile device management, MDM
- 131: content delivery network, CDN
- 14: service mesh
- 141: remote control object
- 142: global control object
- 15: API gateway
- 16: 3DRT gateway
- 17: integration gateway
- 18: container registry
- 19: mass storage
- 20: high-speed dynamic resource management system
- 2: terminal device
- 3: hybrid multi-cloud infrastructure
- 4: XR device
- 40: device runtime engine
- 41: 3DRT application frontend
- 410: authentication software development kit, SDK
- 411: theming SDK
- 412: synchronization SDK
- 413: network metrics SDK
- 414: cloudXR client SDK
- 5: method for developing a 3DRT application
- 50: first stage, setting-up
- 500: authenticating a developer
- 501: creating a development project
- 51: second stage, configuring the development project
- 510: setting properties of the development project
- 511: selecting common services of the development project
- 512: examining costs of the development project
- 513: saving development project
- 514: downloading development resources
- 52: third stage, preparing and running
- 520: deploying the development project
- 521: customizing a client app of the development project
- 522: enrolling/inviting consumers of the development project
- 523: running the 3DRT application of the development project
- 53: fourth stage, consuming
- 530: running the customized client app
- 531: logging into the running 3DRT application
- 532: consuming an immersive experience provided by the running 3DRT application
- 54: fifth stage, validating
- 540: stopping the 3DRT application
- 541: reviewing billing information of the stopped 3DRT application
- 542: getting an analytics report of the stopped 3DRT application
- 55: optimization loop

## Claims

1. A system for developing a three-dimensional real-time, 3DRT, application, the system comprising a hybrid multi-cloud infrastructure (3) providing a backend (1) of a distributed development platform, the backend (1) comprising a plurality of different services for realizing a development project for developing a 3RDT application, and a terminal device (2) providing a frontend (10) of the distributed development platform, the frontend (10) comprising a user interface, wherein the different services are communicatively linked by a service mesh (14) of the backend (1).

2. The system according to claim 1, wherein the backend (1) defines a plurality of planes (11, 12, 13), each plane (11, 12, 13) comprising one cluster or more than one cluster, each cluster comprising one service or more than one service, each service being communicatively connected to the service mesh (14).

3. The system according to claim 2, wherein the backend (1) defines a first plane (11) comprising a project cluster (110) and/or the backend (1) defines a second plane (12) comprising a plurality of runtime clusters (121, 122, 123, 124) and/or the backend (1) defines a third plane (13) comprising a plurality of extended reality, XR, devices (4) configured for accessing a running 3DRT application.

4. The system according to claim 3, wherein the project cluster (110) comprises a developer authentication service (1100), a project configuration service (1101), a cost estimation service (1102), a client app customization service (1103), a project generation service (1104), a notification service (1105), an checking availability service (1106) and/or a project control service (1107).

5. The system according to claim 3 or 4, wherein the plurality of runtime clusters (121, 122, 123, 124) comprises a common services cluster (121), the common services cluster (121) comprising a deployment service (1210), a consumer authorization service (1211), a UI theming service (1212), an XR session orchestration service (1213), an XR metrics service (1214), a network conditions SIM service (1215) and/or a billing service (1216), and/or an Omniverse, OVX, cluster (122), the OVX cluster (122) comprising an Omniverse application (1220), Omniverse micro services (1221), an Omniverse Nucleus Server (1222) and/or Omniverse 3DRT applications (1223), and/or a game engine cluster (123), the game engine cluster (123) comprising a plurality of game engine services (1230, 1231, 1232), and/or an artificial intelligence, Al, cluster (124), the AI cluster (124) comprising an NVIDIA avatar cloud engine (1240) and a plurality of Al services (1241, 1242).

6. A method (5) for developing a 3DRT application, wherein a frontend (10) of a distributed development platform accesses a backend (1) of the distributed development platform, the frontend (10) being provided by a terminal device (2) and the backend (1) being provided by a hybrid multi-cloud infrastructure (3) and comprising a plurality of different services for realizing a development project for developing a 3D real-time application, the different services being communicatively linked by a service mesh (14) of the backend (1).

7. The method according to claim 6, comprising a plurality of subsequent stages (50, 51, 52, 53, 54), the plurality of stages (50, 51, 52, 53, 54) comprising a setup stage (50), a configuration stage (51) following the setup stage (50), a deployment stage (52) following the configuration stage (51), a consumption stage (53) following the deployment stage (52) and a validation stage (54) following the consumption stage (53), wherein
- a first plane (11) defined by the backend (1) supports the setup stage (50), the configuration stage (51), the deployment stage (52) and the validation stage (54);
- a second plane (12) defined by the backend (1) supports the deployment stage (52) and the consumption stage (53); and
- a third plane (13) defined by the backend (1) supports the consumption stage (53) and the validation stage (54).

8. The method according to claim 7, wherein a sequence of the deployment stage (52), the consumption stage (53) and the validation stage (54) is iteratively repeated for further developing the 3DRT application.

9. The method according to claim 7 or 8, wherein the setup stage (50) comprises authenticating (500) a developer and creating (501) a development project for developing the 3DRT application.

10. The method according to one of claims 7 to 9, wherein the configuration stage (51) comprises setting (510) properties of the development project, selecting (511) common services of the development project, examining (512) costs of the development project, saving (513) the development project and downloading (514) resources of the development project.

11. The method according to one of claims 7 to 10, wherein the deployment stage (52) comprises deploying (520) the development project, customizing (521) a client app of the development project, enrolling/inviting (522) consumers of the development project and running (523) the 3DRT application of the development project.

12. The method according to one of claims 7 to 11, wherein the consumption stage (53) comprises running (530) the customized client app, logging (531) into the running 3DRT application and consuming (532) an immersive experience provided by the running 3DRT application.

13. The method according to one of claims 7 to 12, wherein the validation stage (54) comprises stopping (540) the running 3DRT application, reviewing (541) billing information of the stopped 3DRT application and receiving (542) an analytics report of the stopped 3DRT application.

14. A use of a service mesh (14) for implementing a backend (1) of a distributed development platform of a system for developing a 3DRT application.

15. A computer program product, comprising a digital storage medium storing a program code, the program code causing a hybrid multi-cloud infrastructure to participate in a method according to one of claims 7 to 13 as a backend of a distributed development platform of a system for developing a 3DRT application when being executed by processors of the hybrid multi-cloud infrastructure.
